# EUROPEAN PATENT SPECIFICATION

(11) **EP 4 250 866 B1**
(45) Date of publication and mention of the grant of the patent: **06.05.2026**
(21) Application number: 21926183.1
(22) Date of filing: 22.02.2021
(51) Int. Cl.: H04L 69/22, H04W 8/00, H04W 76/14, H04L 67/51, H04W 88/04

(54) **WIRELESS COMMUNICATION METHOD AND TERMINAL DEVICE**
DRAHTLOSKOMMUNIKATIONSVERFAHREN UND ENDGERÄTEVORRICHTUNG
PROCÉDÉ DE COMMUNICATION SANS FIL ET DISPOSITIF TERMINAL

(43) Date of publication of application: 27.09.2023
(73) Proprietor: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Qianxi, Dongguan, Guangdong 523860 (CN)
(74) Representative: Taor, Simon Edward William
(86) International application number: PCT/CN2021/077323
(87) International publication number: WO 2022/174466

(56) References cited:
- CN-A- 107 211 264
- CN-A- 108 307 536
- CN-A- 111 096 058
- US-A1- 2016 270 134
- US-A1- 2017 164 332
- "3rd Generation Partnership Project; Technical Specification Group Services and System Aspects; Architecture enhancements for 5G System (5GS) to support Vehicle-to-Everything (V2X) services (Release 16)", vol. SA WG2, no. V16.5.0, 17 December 2020 (2020-12-17), pages 1 - 58, XP051999847, Retrieved from the Internet <URL:https://ftp.3gpp.org/Specs/latest/Rel-16/23_series/23287-g50.zip 23287-g50.docx> [retrieved on 20201217]

## Description

### TECHNICAL FIELD

The embodiments of the present disclosure relate to communication technology, and more particularly, to a wireless communication method, a terminal device and a computer-readable storage medium.

### BACKGROUND

In a New Radio (NR) system, a terminal device with a Proximity-based Services (ProSe) capability can directly communicate with another terminal device with the ProSe capability via a PCS interface. The terminal with the ProSe capability obtains a link layer identifier (Layer 2 ID) of the peer terminal from a frame structure of a short-distance interaction message. When the two terminals perform message transfer via a relay terminal (relay UE), the terminal can only obtain the link layer identifier of the Relay UE from the frame structure of the short-distance interaction message, but cannot obtain the link layer identifier of the peer terminal, so it cannot correctly discover the peer terminal via the Relay UE, and the short-range communication connection can be correctly established between the two terminals via the Relay UE.

US 2016/0270134 A1 discloses that a user equipment (UE) is configured to receive a request from a first peer UE to communicate with a target user corresponding to a second peer UE. The UE is configured to determine that the second peer UE is within a communication range of the UE. The UE is configured to, in response to receiving the request, relay internet protocol (IP) packets from the first peer UE to the second peer UE and relay IP packets from the second peer UE to the first peer UE.

"3rd Generation Partnership Project; Technical Specification Group Services and System Aspects; Architecture enhancements for 5G System (5GS) to support Vehicle-to-Everything (V2X) services (Release 16)", 3GPP STANDARD; 3GPP TS 23.287, F-06921, specifies architecture enhancements to the 5G System to facilitate vehicular communications for Vehicle-to-Everything (V2X) services.

### SUMMARY

The embodiments of the present disclosure provide a wireless communication method and a terminal device. The terminal device can obtain a link layer identifier of a peer terminal via a Relay UE, and discover the peer terminal via the Relay UE, such that a short-range communication connection can be correctly established between the two terminals via the Relay UE.

In a first aspect, a wireless communication method is provided, which is defined in claim 1.

In a second aspect, a wireless communication method is provided, which is defined in claim 3.

In a third aspect, a wireless communication method is provided, which is defined in claim 5.

In a fourth aspect, a terminal device is provided, which is defined in claim 6.

In a fifth aspect, a computer-readable storage medium is provided, which is defined in claim 7.

In a sixth aspect, a computer program product is provided, which is defined in claim 8.

Further advantageous embodiments of the present disclosure are indicated in the dependent claims.

It is to be understood that both the forgoing general description and the following detailed description are exemplary only, and are not restrictive of the present disclosure.

### BRIEF DESCRIPTION OF DRAWINGS

FIG. 1 is a schematic diagram showing an architecture of a communication system in which an embodiment of the present disclosure is applied.
FIG. 2 is a schematic flowchart illustrating a discovery process according to the present disclosure.
FIG. 3 is a schematic flowchart illustrating direct communication establishment according to the present disclosure.
FIG. 4 is a schematic diagram showing a relay communication according to the present disclosure.
FIG. 5 is a schematic diagram showing a protocol stack for relay communication according to the present disclosure.
FIG. 6 is a schematic flowchart illustrating a wireless communication method according to an embodiment of the present disclosure.
FIG. 7 is a schematic flowchart illustrating a relay communication according to an embodiment of the present disclosure.
FIG. 8 is a schematic flowchart illustrating another relay communication according to an embodiment of the present disclosure.
FIG. 9 is a schematic flowchart illustrating another wireless communication method according to an embodiment of the present disclosure.
FIG. 10 is a schematic flowchart illustrating yet another wireless communication method according to an embodiment of the present disclosure.
FIG. 11 is a schematic block diagram of a terminal device according to an embodiment of the present disclosure.
FIG. 12 is a schematic block diagram of another terminal device according to an embodiment of the present disclosure.
FIG. 13 is a schematic block diagram of yet another terminal device according to an embodiment of the present disclosure.
FIG. 14 is a schematic block diagram of a communication device according to another embodiment of the present disclosure.
FIG. 15 is a schematic block diagram of an apparatus according to an embodiment of the present disclosure.
FIG. 16 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

In some embodiments, the communication system of an embodiment of the present disclosure may be applied to a Carrier Aggregation (CA) scenario, a Dual Connectivity (DC) scenario, a Standalone (SA) network deployment scenario, and the like.

In some embodiments, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. In some embodiments, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. In some embodiments, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

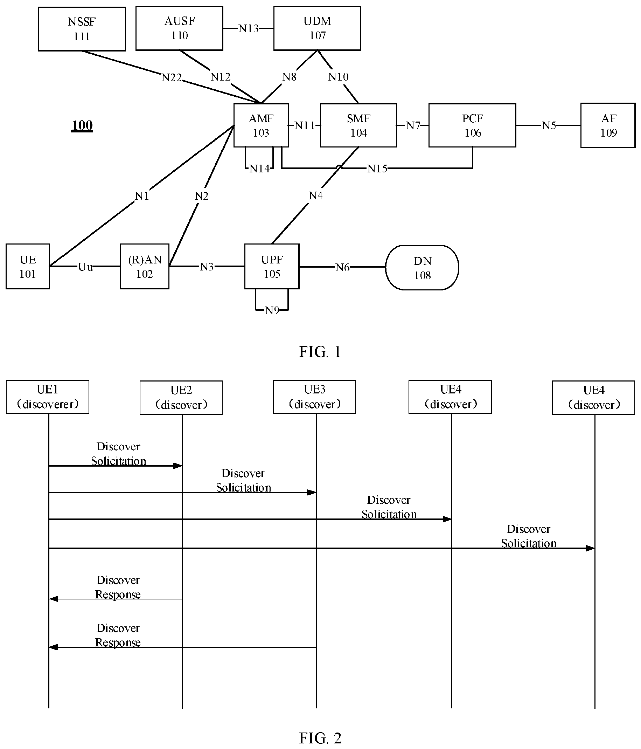

Exemplarily, FIG. 1 shows a communication system 100 in which an embodiment of the present disclosure can be applied. A shown in FIG. 1, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows a schematic diagram of a communication system 100 in which the present disclosure can be applied. As shown in FIG. 1, the communication system 100 mainly includes a terminal device (User Equipment, or UE) 101, an Access Network (AN) device 102, and an Access and Mobility Management Function (AMF) entity 103, a Session Management Function (SMF) entity 104, a User Plane Function (UPF) entity 105, a Policy Control Function (PCF) entity 106, a Unified Data Management (UDM) entity 107, a Data Network (DN) 108, an Application Function (AF) entity 109, an Authentication Server Function (AUSF) entity 110, and a Network Slice Selection Function (NSSF) entity 111.

Specifically, in the communication system 100, the UE 101 establishes an access stratum connection with the AN device 102 via a Uu interface for access stratum message exchange and wireless data transmission, and the UE 101 establishes a Non-Access Stratum (NAS) connection with the AMF entity 103 via an N1 interface for NAS message exchange. The AN device 102 is connected to the AMF entity 103 via an N2 interface, and the AN device 102 is connected to the UPF entity 105 via an N3 interface. A plurality of UPF entities 105 are connected with each other via an N9 interface. The UPF entity 105 is connected to the DN 108 via an N6 interface. Meanwhile, the UPF entity 105 is connected to the SMF entity 104 via an N4 interface. The SMF entity 104 is connected to the PCF entity 106 via an N7 interface, the SMF entity 104 is connected to the UDM entity 107 via an N10 interface, and the SMF entity 104 controls the UPF entity 105 via the N4 interface. At the same time, the SMF entity 104 is connected to the AMF entity 103 via the N11 interface. A plurality of AMF entities 103 are connected with each other via an N14 interface, and the AMF entity 103 is connected to the UDM entity 107 via an N8 interface, the AMF entity 103 is connected to the AUSF entity 110 via an N12 interface, the AMF entity 103 is connected to the NSSF entity 111 via an N22 interface, and at the same time, the AMF entity 103 is connected to the PCF entity 106 via an N15 interface. The PCF entity 106 is connected to the AF entity 109 via an N5 interface. The AUSF entity 110 is connected to the UDM entity 107 via an N13 interface.

In the communication system 100, the UDM entity 107 is a subscription database in the core network, which stores subscription data of users in the 5G network. The AMF entity 103 is the mobility management function in the core network, and the SMF entity 104 is the session management function in the core network. In addition to performing mobility management for the UE 101, the AMF entity 103 is also responsible for forwarding session management related messages between the UE 101 and the SMF entity 104. The PCF entity 106 is a policy management function in the core network, responsible for formulating policies related to mobility management, session management, and charging for the UE 101. The UPF entity 105 is the user plane function in the core network, performs data transmission with the external data network via the N6 interface, and performs data transmission with the AN device 102 via the N3 interface. After the UE 101 accesses the 5G network via the Uu interface, a Protocol Data Unit (PDU) session data connection between the UE 101 and the UPF entity 105 is established under the control of the SMF entity 104, so as to perform data transmission. The AMF entity 103 and the SMF entity 104 obtain user subscription data from the UDM entity 107 via the N8 and N10 interfaces, and obtain policy data from the PCF entity 106 via the N15 and N7 interfaces, respectively.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

The terms used in the embodiments of the present disclosure are provided only for explaining the specific embodiments of the present disclosure, rather than limiting the present disclosure. The terms such as "first", "second", "third", "fourth", etc., as used in the description, claims and figures of the present disclosure are used for distinguishing different objects from each other, rather than defining a specific order. In addition, the terms such as "include" and "have" and any variants thereof are intended to cover non-exclusive inclusion.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In order to better understand the embodiments of the present disclosure, the direct communication related to the present disclosure will be described.

A UE with the ProSe capability can directly communicate with another UE with the ProSe capability via a PCS interface. A UE with the ProSe capability can discover another UE with the ProSe capability using the scheme shown in FIG. 2. UE1 broadcasts information on a UE it wants to discover, such as service information (indicating that it wants to discover a UE that supports the service), a user identifier of a target UE at the application layer, etc. The frame structure of the data packet of the broadcast message from UE1 carries a link layer identifier (Layer 2 ID) of UE1. UE2 determines that it is the UE that UE1 wants to discover by receiving the broadcast message, and obtains the Layer 2 ID of UE1. UE2 transmits a response message to UE1, which carries information on UE2, such as information on a service supported by UE2, a user identifier of UE2 at the application layer, etc. The frame structure of the response message transmitted by UE2 carries a link layer identifier (Layer 2 ID) of UE2, and UE1 learns the information on UE2 and the Layer 2 ID of UE2.

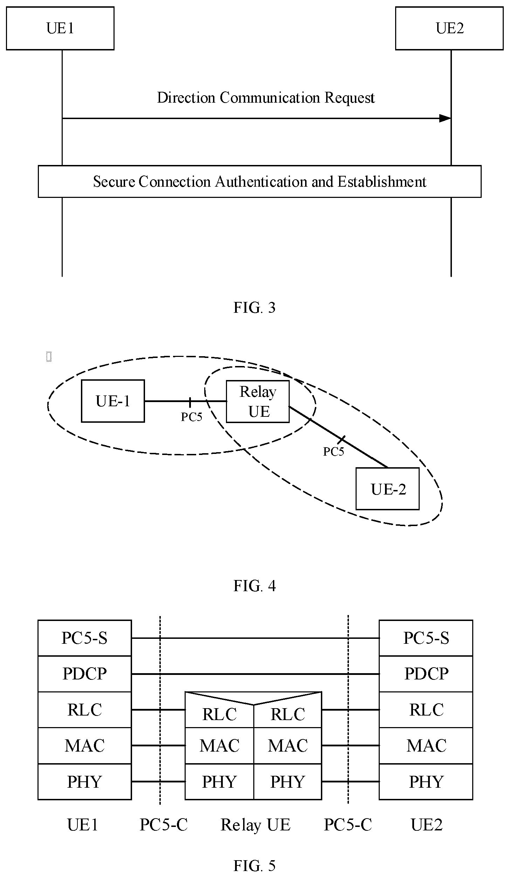

After obtaining the Layer 2 ID of UE2, UE1 may transmit a direct communication request to UE2, requesting for establishing a PC5 connection, as shown in FIG. 3.

When two UEs with the ProSe capability are far away from each other and cannot establish communication directly via the PCS interface, the communication can be relayed through a relay terminal (Relay UE) with the ProSe capability. As shown in FIG. 4, the Relay UE can directly communicate with UE1 via the PCS interface, and can also directly communicate with UE2 via PCS, and then UE1 and UE2 can perform service interaction via the Relay UE. FIG. 5 is a protocol stack for establishing a PC5 connection between UE1 and UE2 via a Relay UE. Specifically, as shown in FIG. 5, UE1 and UE2 are connected via a PCS-S interface. In addition, the Packet Data Convergence Protocol (PDCP) layer of UE1 is connected to the PDCP layer of UE2. The Radio Link Control (RLC) layer of UE1 is connected to the RLC layer of the relay terminal (Relay UE) via a PC5-C interface. The RLC layer of the relay terminal (Relay UE) is connected to the RLC layer of UE2 via a PC5-C interface. The Media Access Control (MAC) layer of UE1 is connected to the MAC layer of the relay terminal (Relay UE) via a PC5-C interface. The MAC layer of the relay terminal (Relay UE) is connected to the MAC layer of UE2 via a PC5-C interface. The physical (PHY) layer of UE1 is connected to the PHY layer of the relay terminal (Relay UE) via a PC5-C interface. The PHY layer of the relay terminal (Relay UE) is connected to the PHY layer of UE2 via a PC5-C interface.

The terminal with the ProSe capability obtains a link layer identifier (Layer 2 ID) of the peer terminal from a frame structure of a short-distance interaction message. When the two terminals perform message transfer via a relay terminal (relay UE), the terminal can only obtain the link layer identifier of the Relay UE from the frame structure of the short-distance interaction message, but cannot obtain the link layer identifier of the peer terminal, so it cannot correctly discover the peer terminal via the Relay UE, and the short-range communication connection cannot be correctly established between the two terminals via the Relay UE.

Based on the above problems, the present disclosure provides a relay communication solution. The terminal device can obtain a link layer identifier of a peer terminal via a Relay UE, and discover the peer terminal via the Relay UE, such that a short-range communication connection can be correctly established between the two terminals via the Relay UE.

The technical solutions of the present disclosure will be described in detail below with reference to specific embodiments.

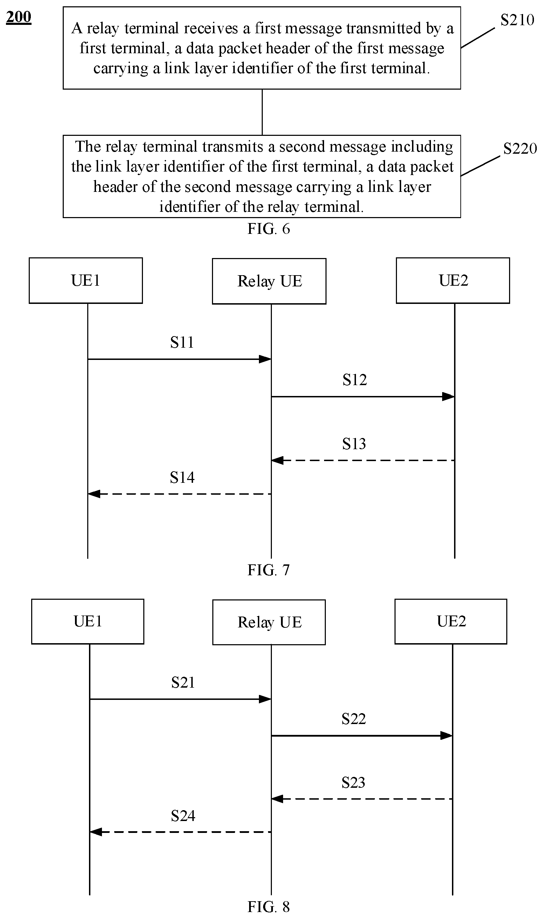

FIG. 6 is a schematic flowchart illustrating a wireless communication method 200 according to an embodiment of the present disclosure. As shown in FIG. 6, the method 200 includes at least part of the following content.

At S210, a relay terminal receives a first message transmitted by a first terminal. A data packet header of the first message carries a link layer identifier of the first terminal.

At S220, the relay terminal transmits a second message including the link layer identifier of the first terminal. A data packet header of the second message carries a link layer identifier of the relay terminal.

In an embodiment of the present disclosure, the first terminal may transmit its link layer identifier to the peer terminal via the relay terminal, so as to obtain the link layer identifier of the peer terminal via the relay terminal, such that the peer terminal can be discovered and the first terminal can establish the short-rang communication connection with the peer terminal via the relay terminal.

In an embodiment of the present disclosure, the peer terminal of the first terminal can obtain the link layer identifier of the first terminal via the relay terminal in S220, such that the first terminal can be discovered, and the peer terminal of the first terminal can establish the short-range communication connection with the first terminal via the relay terminal.

In some embodiments, the first terminal may discover the peer terminal via the relay terminal, or the first terminal may establish a short-range communication connection with the peer terminal via the relay terminal.

In some embodiments, the link layer identifier may be carried in the data packet header. Specifically, the link layer identifier may be carried in a frame structure of the data packet.

In some embodiments, the link layer identifier may be a Layer 2 identifier (ID). Of course, it may alternatively be some other identifiers, and the present disclosure is not limited to this.

In some embodiments, the first message and/or the second message may be a direct communication request message; or the first message and/or the second message may be a direct communication accept message.

In some embodiments, the first message and/or the second message may be a discovery solicitation message; or the first message and/or the second message may be a discovery response message.

In some embodiments, after the relay terminal transmits the second message, that is, after S220, the relay terminal may receive a third message transmitted by a second terminal, the third message including the link layer identifier of the first terminal, and a data packet header of the third message carrying a link layer identifier of the second terminal; and the relay terminal may transmit a fourth message to the first terminal, the fourth message including the link layer identifier of the second terminal, and a data packet header of the fourth message carrying the link layer identifier of the relay terminal.

In an embodiment of the present disclosure, the first terminal may receive the fourth message transmitted by the relay terminal, and obtain the link layer identifier of the second terminal from the fourth message, such that the second terminal can be discovered and the first terminal can establish a short-rang communication connection with the second terminal via the relay terminal.

In some embodiments, the first message and/or the second message may be a direct communication request message, and the third message and/or the fourth message may be a direct communication accept message.

In some embodiments, the first message and/or the second message may be a discovery solicitation message, and the third message and/or the fourth message may be a discovery response message.

In some embodiments, the above S220 may specifically be:
the relay terminal transmitting the second message by means of broadcast.

When the first message is the direct communication request message, the first message includes the link layer identifier of the second terminal. Further, when the first message includes the link layer identifier of the second terminal, the above S220 is:
the relay terminal transmitting the second message to the second terminal according to the link layer identifier of the second terminal.

In some embodiments, the first message and the second message may include information on a terminal to be discovered; and/or the third message and the fourth message may include information on the second terminal.

In some embodiments, the information on the terminal to be discovered may include, but not limited to, at least one of:

information on a service supported by the terminal to be discovered, a user identifier of the terminal to be discovered at an application layer, or a user identifier of the first terminal at the application layer.

In some embodiments, the information on the second terminal may include, but not limited to, at least one of:
information on a service supported by the second terminal, or a user identifier of the second terminal at an application layer.

Therefore, in the embodiment of the present disclosure, the terminal device can obtain the link layer identifier of the peer terminal via the relay terminal, and discover the peer terminal via the relay terminal, such that the short-range communication connection can be correctly established between the two terminals via the relay terminal.

The technical solution of the present disclosure will be described in detail below with reference to specific embodiments 1 and 2. Here, Embodiment 1 is used for a discovery process of short-distance communication, and Embodiment 2 is used for a connection establishment process of short-distance communication. The premise of Embodiment 2 is that UE1 has obtained the link layer identifier of UE2.

In Embodiment 1, UE1 may obtain the link layer identifier of UE2 through S11 to S14, as shown in FIG. 7.

At S11, UE1 broadcasts Message 1, which is a discovery solicitation message or a direct communication request message. Message 1 carries information on a UE to be discovered, such as service information (indicating that a UE supporting the service is to be discovered), a user identifier of a target UE at the application layer, and possibly a user identifier of UE1 at the application layer. The frame structure of the data packet of the broadcast message from UE1 carries the link layer identifier (Layer 2 ID) of UE1.

At S12, after receiving Message 1, the relay terminal (Relay UE) continues to broadcast Message 2 (that is, Message 1 is relayed, i.e., if Message 1 is a discovery solicitation message, Message 2 is also a discovery solicitation message; or if Message 1 is a direct communication request message, Message 2 is also a direct communication request message). The Relay UE includes the link layer identifier of the Relay UE in the frame structure of the data packet of Message 2, and the message content of Message 2 includes the link layer identifier (Layer 2 ID) of UE1 and the above information on the UE to be discovered.

At S13, UE2 determines that it is the UE to be discovered by UE1 by receiving Message 2, and obtains the Layer 2 ID of UE 1 from the content of Message 2, and obtains the link layer identifier of the Relay UE from the frame structure of the data packet of Message 2. UE2 transmits Message 3 to the Relay UE (if Message 2 is a discovery solicitation message, Message 3 is a discovery response message; or if Message 2 is a direct communication request message, Message 3 is a direct communication accept message), and the content of Message 3 carries information on UE2, such as information on a service supported by UE2, the user identifier of UE2 at the application layer, and the link layer identifier (Layer 2 ID) of UE1. The frame structure of Message 3 transmitted by UE2 carries the link layer identifier (Layer 2 ID) of UE2.

At S14, after receiving Message 3, the Relay UE obtains the Layer 2 ID of UE1, and then transmits Message 4 to UE1 (if Message 3 is a discovery response message, Message 4 is also a discovery response message; or if Message 3 is a direct communication accept message, Message 4 is also a direct communication accept message). The content of Message 4 includes the link layer identifier of UE2 and the above information on UE2, and the frame structure of Message 4 transmitted by the Relay UE carries the link layer identifier of the Relay UE. Optionally, Message 4 may also include the link layer identifier of UE1.

In Embodiment 1, UE1 learns the information of UE2 (information on a service supported by UE2, a user identifier of UE2 at the application layer, etc.) and the Layer 2 ID of UE2 in S14.

In Embodiment 2, UE1 may establish a short-range communication connection with UE2 through S21 to S24, as shown in FIG. 8.

At S21, UE1 transmits Message 1 to a relay terminal (Relay UE). Message 1 is a direct communication request message, and Message 1 carries a link layer identifier (Layer 2 ID) of UE2. The frame structure of the data packet of Message 1 carries the link layer identifier (Layer 2 ID) of UE1.

At S22, after receiving Message 1, the Relay UE transmits Message 2 to UE2 according to the link layer identifier (Layer 2 ID) of UE2 in Message 1. Message 2 is also a direct communication request message. The Relay UE includes the link layer identifier (Layer 2 ID) of the Relay UE in the frame structure of the data packet of Message 2, and the content of Message 2 includes the link layer identifier (Layer 2 ID) of UE1. Optionally, the content of Message 2 may also include the link layer identifier (Layer 2 ID) of UE2.

At S23, UE2 obtains the link layer identifier (Layer 2 ID) of UE1 from the content of the received Message 2, obtains the link layer identifier (Layer 2 ID) of the Relay UE from the frame structure of the data packet of Message 2, and UE2 transmits Message 3 to the Relay UE. Message 3 is a direct communication accept message. The content of Message 3 carries the link layer identifier (Layer 2 ID) of UE1, and the frame structure of Message 3 transmitted by UE2 may carry the link layer identifier (Layer 2 ID) of UE2.

At S24, after receiving Message 3, the Relay UE obtains the link layer identifier (Layer 2 ID) of UE1, and then can transmit Message 4 to UE1. Message 4 is also a direct communication accept message, and the content of Message 4 includes the link layer identifier (Layer 2 ID) of UE2. The frame structure of Message 4 transmitted by the Relay UE carries the link layer identifier of the Relay UE. Optionally, the content of Message 4 may also include the link layer identifier (Layer 2 ID) of UE1.

In Embodiment 2, after S24, a short-range communication connection is established between UE1 and UE2.

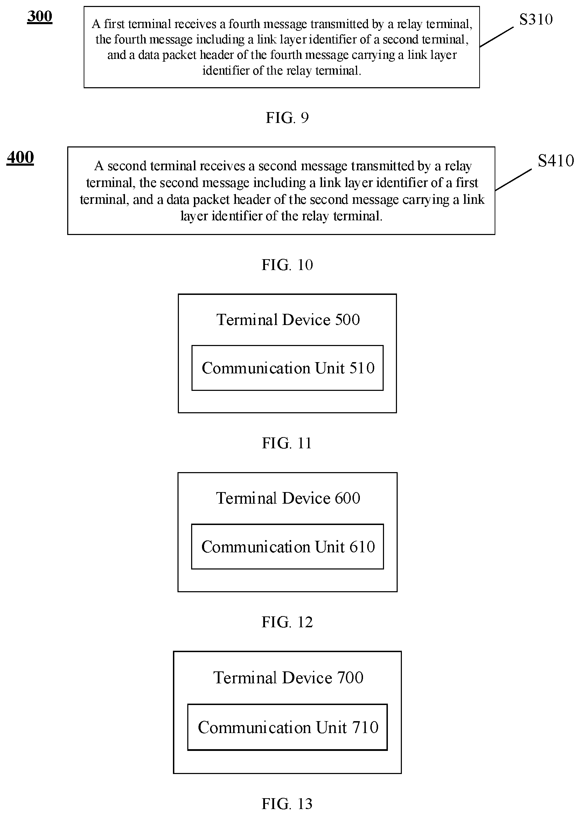

The embodiments related to the relay terminal of the present disclosure have been described above in detail in conjunction with FIGS 6-8. The embodiments related to the first terminal of the present disclosure will be described below with reference to FIG. 9. It can be appreciated that the embodiments related to the first terminal and the embodiments related to the relay terminal correspond to each other, and for similar descriptions, reference can be made to the embodiments related to the relay terminal.

FIG. 9 is a schematic flowchart illustrating a wireless communication method 300 according to an embodiment of the present disclosure. As shown in FIG. 9, the method 300 may include at least part of the following content.

At S310, a first terminal receives a fourth message transmitted by a relay terminal. The fourth message includes a link layer identifier of a second terminal, and a data packet header of the fourth message carries a link layer identifier of the relay terminal.

In the embodiment of the present disclosure, the first terminal can receive the fourth message transmitted by the relay terminal, and obtain the link layer identifier of the second terminal from the fourth message, such that the second terminal can be discovered, and the first terminal can establish a short-range communication connection with the second terminal via the relay terminal.

In some embodiments, the data packet header carrying the link layer identifier. Specifically, the link layer identifier is carried in a frame structure of the data packet.

In some embodiments, the link layer identifier is a Layer 2 identifier (ID). Of course, it may alternatively be some other identifiers, and the present disclosure is not limited to this.

In some embodiments, the fourth message may be a discovery response message, or the fourth message may be a direct communication accept message.

In some embodiments, before receiving the fourth message, the first terminal may transmit a first message to the relay terminal, and a data packet header of the first message may carry the link layer identifier of the first terminal.

In some embodiments, the first message may be a discovery solicitation message, and the fourth message may be a discovery response message.

In accordance with the claims, the first message is a direct communication request message, and the fourth message is a direct communication accept message.

When the first message is the direct communication request message, the first message includes the link layer identifier of the second terminal. In this case, the relay terminal transmits a second message to the second terminal according to the link layer identifier of the second terminal. The second message includes the link layer identifier of the first terminal, and a data packet header of the second message may carry the link layer identifier of the relay terminal.

In some embodiments, the first terminal may transmit the first message to the relay terminal by means of broadcast.

In some embodiments, the first message may include information on a terminal to be discovered; and/or the fourth message may include information on the second terminal.

In some embodiments, the information on the terminal to be discovered may include, but not limited to, at least one of:
information on a service supported by the terminal to be discovered, a user identifier of the terminal to be discovered at an application layer, or a user identifier of the first terminal at the application layer.

In some embodiments, the information on the second terminal may include, but not limited to, at least one of:
information on a service supported by the second terminal, or a user identifier of the second terminal at an application layer.

Therefore, in the embodiment of the present disclosure, the terminal device can obtain the link layer identifier of the peer terminal via the relay terminal, and discover the peer terminal via the relay terminal, such that a short-range communication connection can be correctly established between the two terminals via the relay terminal.

The embodiments related to the relay terminal of the present disclosure have been described above in detail in conjunction with FIGS 6-8. The embodiments related to the second terminal of the present disclosure will be described below with reference to FIG. 10. It can be appreciated that the embodiments related to the second terminal and the embodiments related to the relay terminal correspond to each other, and for similar descriptions, reference can be made to the embodiments related to the relay terminal.

FIG. 10 is a schematic flowchart illustrating a wireless communication method 400 according to an embodiment of the present disclosure. As shown in FIG. 10, the method 400 includes at least part of the following content.

At S410, a second terminal receives a second message transmitted by a relay terminal. The second message includes a link layer identifier of a first terminal, and a data packet header of the second message carries a link layer identifier of the relay terminal.

In the embodiment of the present disclosure, the second terminal can obtain the link layer identifier of the first terminal via the relay terminal, such that the first terminal can be discovered, and the second terminal can establish a short-range communication connection with the first terminal via the relay terminal.

In some embodiments, the data packet header carrying the link layer identifier, Specifically, the link layer identifier is carried in a frame structure of the data packet.

In some embodiments, the link layer identifier is a Layer 2 identifier (ID). Of course, it may alternatively be some other identifiers, and the present disclosure is not limited to this.

In some embodiments, the second message is a direct communication request message; or, not claimed, the second message may be a discovery solicitation message; or the second message may be a direct communication accept message; or the second message may be a discovery response message.

The second terminal transmits a third message to the relay terminal. The third message includes the link layer identifier of the first terminal, and a data packet header of the third message carries the link layer identifier of the second terminal.

In the embodiment of the present disclosure, the second terminal may determine that it is the terminal that the first terminal wants to discover by receiving the second message, and obtain the link layer identifier of the first terminal from the content of the second message, and obtain the link layer identifier of the relay terminal from the frame structure of the data packet of the second message. The second terminal may transmit a third message (discovery response message or direct communication accept message) to the relay terminal, and the content of the third message carries information on the second terminal, such as information on a service supported by the second terminal, a user identifier of the second terminal at the application layer, etc., and the link layer identifier (Layer 2 ID) of the first terminal. The frame structure of the third message transmitted by the second terminal may carry the link layer identifier (Layer 2 ID) of the second terminal.

The second message may be a direct communication request message, and the third message is a direct communication accept message; or the second message may be a discovery solicitation message, and the third message may be a discovery response message.

When the second message is the direct communication request message, the second message is transmitted by the relay terminal according to the link layer identifier of the second terminal.

In some embodiments, the second message may be transmitted by the relay terminal by means of broadcast.

In some embodiments, the second message may include information on a terminal to be discovered; and/or the third message may include information on the second terminal.

In some embodiments, the information on the terminal to be discovered may include, but not limited to, at least one of:
information on a service supported by the terminal to be discovered, a user identifier of the terminal to be discovered at an application layer, or a user identifier of the first terminal at the application layer.

In some embodiments, the information on the second terminal may include, but not limited to, at least one of:
information on a service supported by the second terminal, or a user identifier of the second terminal at an application layer.

Therefore, in the embodiment of the present disclosure, the terminal device can obtain the link layer identifier of the peer terminal via the relay terminal, and discover the peer terminal via the relay terminal, such that a short-range communication connection can be correctly established between the two terminals via the relay terminal.

The method embodiments of the present disclosure have been described in detail above with reference to FIGS. 6-10, and the apparatus embodiments of the present disclosure will be described in detail below with reference to FIGS. 11-16. It can be appreciated that the apparatus embodiments and the method embodiments correspond to each other, and for similar descriptions, reference can be made to the method embodiments.

FIG. 11 shows a schematic block diagram of a terminal device 500 according to an embodiment of the present disclosure. The terminal device 500 is a relay terminal. As shown in FIG. 11, the terminal device 500 includes:
a communication unit 510 configured to receive a first message transmitted by a first terminal, a data packet header of the first message carrying a link layer identifier of the first terminal.

The communication unit 510 is further configured to transmit a second message including the link layer identifier of the first terminal, a data packet header of the second message carrying a link layer identifier of the relay terminal.

In some embodiments, the communication unit 510 may be further configured to receive a third message transmitted by a second terminal, the third message including the link layer identifier of the first terminal, and a data packet header of the third message carrying a link layer identifier of the second terminal; and
the communication unit 510 may be further configured to transmit a fourth message to the first terminal, the fourth message including the link layer identifier of the second terminal, and a data packet header of the fourth message carrying the link layer identifier of the relay terminal.

In some embodiments, the first message and/or the second message may be a direct communication request message, and the third message and/or the fourth message may be a direct communication accept message; or
the first message and/or the second message may be a discovery solicitation message, and the third message and/or the fourth message may be a discovery response message.

In some embodiments, the first message and/or the second message may be a direct communication request message;
the first message and/or the second message may be a direct communication accept message;
the first message and/or the second message may be a discovery solicitation message; or
the first message and/or the second message may be a discovery response message.

In some embodiments, when the first message is a direct communication request message, the first message may include a link layer identifier of the second terminal.

In some embodiments, the communication unit 510 may be configured to:
transmit the second message to the second terminal according to the link layer identifier of the second terminal.

In some embodiments, the communication unit 510 may be configured to:
transmit the second message by means of broadcast.

In some embodiments, the first message and the second message may include information on a terminal to be discovered; and/or the third message and the fourth message may include information on the second terminal.

In some embodiments, the information on the terminal to be discovered may include at least one of:
information on a service supported by the terminal to be discovered, a user identifier of the terminal to be discovered at an application layer, or a user identifier of the first terminal at the application layer.

In some embodiments, the information on the second terminal may include at least one of:
information on a service supported by the second terminal, or a user identifier of the second terminal at an application layer.

Optionally, in some embodiments, the above communication unit may be a communication interface or a transceiver, or an input/output interface of a communication chip or a system-on-chip.

It can be appreciated that the terminal device 500 according to the embodiment of the present disclosure may correspond to the relay terminal in the method embodiment of the present disclosure, and the above and other operations and/or functions of the respective units in the terminal device 500 are provided for the purpose of implementing the process flow corresponding to the relay terminal in the method 200 shown in FIG. 6, and details thereof will be not omitted here for brevity.

FIG. 12 shows a schematic block diagram of a terminal device 600 according to an embodiment of the present disclosure. The terminal device 600 is a first terminal. As shown in FIG. 12, the terminal device 600 includes:
a communication unit 610 configured to receive a fourth message transmitted by a relay terminal, the fourth message including a link layer identifier of a second terminal, and a data packet header of the fourth message carrying a link layer identifier of the relay terminal.

In some embodiments, the communication unit 610 may be further configured to, prior to receiving the fourth message, transmit a first message to the relay terminal, a data packet header of the first message carrying a link layer identifier of the first terminal.

In some embodiments, the first message may be a discovery solicitation message, and the fourth message may be a discovery response message; or
the first message may be a direct communication request message, and the fourth message may be a direct communication accept message.

In some embodiments, the fourth message may be a discovery response message, or the fourth message may be a direct communication accept message.

In some embodiments, when the first message is a direct communication request message, the first message may include the link layer identifier of the second terminal.

In some embodiments, the communication unit 610 may be configured to:
transmit the first message to the relay terminal by means of broadcast.

In some embodiments, the first message may include information on a terminal to be discovered; and/or the fourth message may include information on the second terminal.

In some embodiments, the information on the terminal to be discovered may include at least one of:
information on a service supported by the terminal to be discovered, a user identifier of the terminal to be discovered at an application layer, or a user identifier of the first terminal at the application layer.

In some embodiments, the information on the second terminal may include at least one of:
information on a service supported by the second terminal, or a user identifier of the second terminal at an application layer.

Optionally, in some embodiments, the above communication unit may be a communication interface or a transceiver, or an input/output interface of a communication chip or a system-on-chip.

It can be appreciated that the terminal device 600 according to the embodiment of the present disclosure may correspond to the first terminal in the method embodiment of the present disclosure, and the above and other operations and/or functions of the respective units in the terminal device 600 are provided for the purpose of implementing the process flow corresponding to the first terminal in the method 300 shown in FIG. 9, and details thereof will be not omitted here for brevity.

FIG. 13 shows a schematic block diagram of a terminal device 700 according to an embodiment of the present disclosure. The terminal device 700 is a second terminal. As shown in FIG. 13, the terminal device 700 includes:
a communication unit 710 configured to receive a second message transmitted by a relay terminal, the second message including a link layer identifier of a first terminal, and a data packet header of the second message carrying a link layer identifier of the relay terminal.

In some embodiments, the communication unit 710 may be further configured to transmit a third message to the relay terminal, the third message including the link layer identifier of the first terminal, and a data packet header of the third message carrying a link layer identifier of the second terminal.

In some embodiments, the second message may be a direct communication request message, and the third message may be a direct communication accept message; or
the second message may be a discovery solicitation message, and the third message may be a discovery response message.

In some embodiments, the second message may be a direct communication request message;
the second message may be a discovery solicitation message;
the second message may be a direct communication accept message; or
the second message may be a discovery response message.

In some embodiments, when the second message is the direct communication request message, the second message may be transmitted by the relay terminal according to the link layer identifier of the second terminal.

In some embodiments, the second message may be transmitted by the relay terminal by means of broadcast.

In some embodiments, the second message may include information on a terminal to be discovered; and/or
the third message may include information on the second terminal.

In some embodiments, the information on the terminal to be discovered may include at least one of:
information on a service supported by the terminal to be discovered, a user identifier of the terminal to be discovered at an application layer, or a user identifier of the first terminal at the application layer.

In some embodiments, the information on the second terminal may include at least one of:
information on a service supported by the second terminal, or a user identifier of the second terminal at an application layer.

Optionally, in some embodiments, the above communication unit may be a communication interface or a transceiver, or an input/output interface of a communication chip or a system-on-chip.

It can be appreciated that the terminal device 700 according to the embodiment of the present disclosure may correspond to the second terminal in the method embodiment of the present disclosure, and the above and other operations and/or functions of the respective units in the terminal device 700 are provided for the purpose of implementing the process flow corresponding to the second terminal in the method 400 shown in FIG. 10, and details thereof will be not omitted here for brevity.

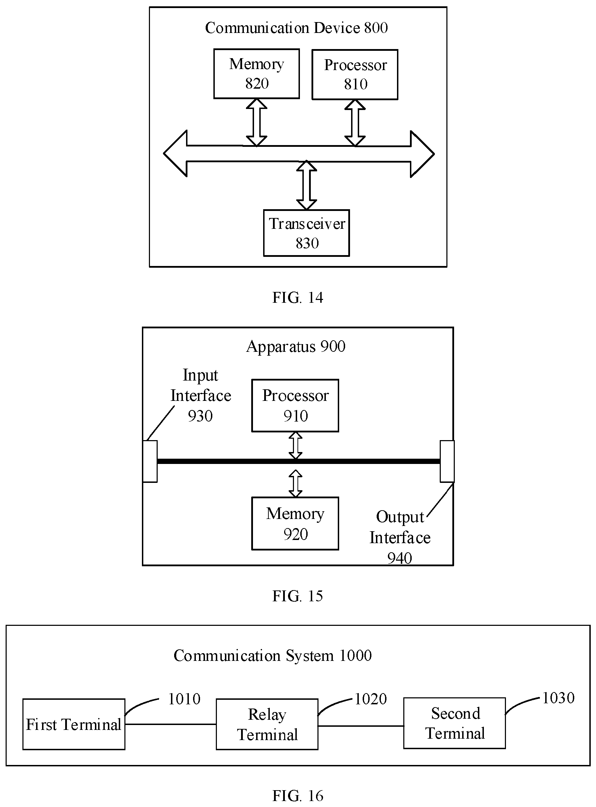

FIG. 14 is a schematic diagram showing a structure of a communication device 800 according to an embodiment of the present disclosure. The communication device 800 shown in FIG. 14 includes a processor 810, and the processor 810 can invoke and execute a computer program from a memory to implement the method in the embodiment of the present disclosure.

In some embodiments, as shown in FIG. 14, the communication device 800 may further include a memory 820. The processor 810 can invoke and execute a computer program from the memory 820 to implement the method in the embodiment of the present disclosure.

The memory 820 may be a separate device independent from the processor 810, or may be integrated in the processor 810.

In some embodiments, as shown in FIG. 14, the communication device 800 may further include a transceiver 830, and the processor 810 may control the transceiver 830 to communicate with other devices, and in particular, transmit information or data to other devices, or receive information or data transmitted by other devices.

Here, the transceiver 830 may include a transmitter and a receiver. The transceiver 830 may further include one or more antennas.

In some embodiments, the communication device 800 may specifically be the relay terminal according to the embodiment of the present disclosure, and the communication device 800 may implement the corresponding processes implemented by the relay terminal in any of the methods according to the embodiments of the present disclosure. For the sake of brevity, details thereof will be omitted here.

In some embodiments, the communication device 800 may specifically be the first terminal according to the embodiment of the present disclosure, and the communication device 800 may implement the corresponding processes implemented by the first terminal in any of the methods according to the embodiments of the present disclosure. For the sake of brevity, details thereof will be omitted here.

In some embodiments, the communication device 800 may specifically be the second terminal according to the embodiment of the present disclosure, and the communication device 800 may implement the corresponding processes implemented by the second terminal in any of the methods according to the embodiments of the present disclosure. For the sake of brevity, details thereof will be omitted here.

FIG. 15 is a schematic diagram showing a structure of an apparatus according to an embodiment of the present disclosure. The apparatus 900 shown in FIG. 15 includes a processor 910, and the processor 910 can invoke and execute a computer program from a memory to implement the method in the embodiment of the present disclosure.

In some embodiments, as shown in FIG. 15, the apparatus 900 may further include a memory 920. The processor 910 can invoke and execute a computer program from the memory 920 to implement the method in the embodiment of the present disclosure.

The memory 920 may be a separate device independent from the processor 910, or may be integrated in the processor 910.

In some embodiments, the apparatus 900 may further include an input interface 930. The processor 910 can control the input interface 930 to communicate with other devices or chips, and in particular, obtain information or data transmitted by other devices or chips.

In some embodiments, the apparatus 900 may further include an output interface 940. The processor 910 can control the output interface 940 to communicate with other devices or chips, and in particular, output information or data to other devices or chips.

In some embodiments, the apparatus can be applied to the relay terminal in the embodiment of the present disclosure, and the apparatus can implement the corresponding processes implemented by the relay terminal in the various methods of the embodiments of the present disclosure. For the sake of brevity, details thereof will be omitted here.

In some embodiments, the apparatus can be applied to the first terminal in the embodiment of the present disclosure, and the apparatus can implement the corresponding processes implemented by the first terminal in the various methods of the embodiments of the present disclosure. For the sake of brevity, details thereof will be omitted here.

In some embodiments, the apparatus can be applied to the second terminal in the embodiment of the present disclosure, and the apparatus can implement the corresponding processes implemented by the second terminal in the various methods of the embodiments of the present disclosure. For the sake of brevity, details thereof will be omitted here.

In some embodiments, the apparatus in the embodiment of the present disclosure may be a chip, e.g., system-level chip, a system-chip, a chip system, or a system-on-chip.

FIG. 16 is a schematic block diagram showing a communication system 1000 according to an embodiment of the present disclosure. As shown in FIG. 16, the communication system 1000 includes a first terminal 1010, a relay terminal 1020, and a second terminal 1030.

Here, the first terminal 1010 can be configured to implement the corresponding functions implemented by the first terminal in the above method, the relay terminal 1020 can be configured to implement the corresponding functions implemented by the relay terminal in the above method, and the second terminal 1030 can be configured to implement the corresponding functions implemented by the second terminal in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

In some embodiments, the computer readable storage medium can be applied to the relay terminal in the embodiment of the present disclosure, and the computer program can cause a computer to perform corresponding procedures implemented by the relay terminal in the method according to any of the embodiments of the present disclosure. Details thereof will be omitted here for simplicity.

In some embodiments, the computer readable storage medium can be applied to the first terminal in the embodiment of the present disclosure, and the computer program can cause a computer to perform corresponding procedures implemented by the first terminal in the method according to any of the embodiments of the present disclosure. Details thereof will be omitted here for simplicity.

In some embodiments, the computer readable storage medium can be applied to the second terminal in the embodiment of the present disclosure, and the computer program can cause a computer to perform corresponding procedures implemented by the second terminal in the method according to any of the embodiments of the present disclosure. Details thereof will be omitted here for simplicity.

An embodiment of the present disclosure also provides a computer program product including computer program instructions.

In some embodiments, the computer program product can be applied to the relay terminal in the embodiment of the present disclosure, and the computer program instructions can cause a computer to perform corresponding procedures implemented by the relay terminal in the method according to any of the embodiments of the present disclosure. Details thereof will be omitted here for simplicity.

In some embodiments, the computer program product can be applied to the first terminal in the embodiment of the present disclosure, and the computer program instructions can cause a computer to perform corresponding procedures implemented by the first terminal in the method according to any of the embodiments of the present disclosure. Details thereof will be omitted here for simplicity.

In some embodiments, the computer program product can be applied to the second terminal in the embodiment of the present disclosure, and the computer program instructions can cause a computer to perform corresponding procedures implemented by the second terminal in the method according to any of the embodiments of the present disclosure. Details thereof will be omitted here for simplicity.

An embodiment of the present disclosure also provides a computer program.

In some embodiments, the computer program can be applied to the relay terminal in the embodiment of the present disclosure. The computer program, when executed on a computer, can cause the computer to perform corresponding procedures implemented by the relay terminal in the method according to any of the embodiments of the present disclosure. Details thereof will be omitted here for simplicity.

In some embodiments, the computer program can be applied to the first terminal in the embodiment of the present disclosure. The computer program, when executed on a computer, can cause the computer to perform corresponding procedures implemented by the first terminal in the method according to any of the embodiments of the present disclosure. Details thereof will be omitted here for simplicity.

In some embodiments, the computer program can be applied to the second terminal in the embodiment of the present disclosure. The computer program, when executed on a computer, can cause the computer to perform corresponding procedures implemented by the second terminal in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of the present disclosure as defined by the claims as attached.

The present disclosure is only limited by the claims. And examples and technical descriptions of apparatuses, products and/or methods in the description and/or drawings which are not covered by the claims are presented not as embodiments of the present disclosure but as background art or examples useful for understanding the present disclosure.

## Claims

1. A wireless communication method, comprising:
receiving, by a relay terminal (1020), a first message transmitted by a first terminal (1010), wherein the first message comprises a link layer identifier of a second terminal (1030), the first message is a direct communication request message, and a frame structure of a data packet of the first message carries a link layer identifier of the first terminal (1010); and
transmitting, by the relay terminal (1020), a second message to the second terminal (1030) based on the link layer identifier of the second terminal (1030) in the first message, wherein the second message is a direct communication request message, the second message comprises the link layer identifier of the second terminal (1030), wherein the link layer identifier of the second terminal (1030) is Layer 2 ID,
and a frame structure of a data packet of the second message carries a link layer identifier of the relay terminal (1020).

2. The method according to claim 1, further comprising:
receiving, by the relay terminal, a third message transmitted by a second terminal, the third message is a direct communication accept message, the third message comprising the link layer identifier of the first terminal, and a data packet header of the third message carrying a link layer identifier of the second terminal; and
transmitting, by the relay terminal, a fourth message to the first terminal, the fourth message is a direct communication accept message, the fourth message comprising the link layer identifier of the second terminal, and a data packet header of the fourth message carrying the link layer identifier of the relay terminal.

3. A wireless communication method, comprising:
transmitting, by a first terminal (1010), a first message to a relay terminal (1020), wherein the first message comprises a link layer identifier of a second terminal (1030), the first message is a direct communication request message, a frame structure of a data packet of the first message carries a link layer identifier of the first terminal (1010), and the link layer identifier of the second terminal (1030) in the first message is used by the relay terminal (1020) to transmit a second message to the second terminal (1030), wherein the second message is a direct communication request message, the second message comprises the link layer identifier of the second terminal (1030), wherein the link layer identifier of the second terminal (1030) is Layer 2 ID, and a frame structure of a data packet of the second message carries a link layer identifier of the relay terminal (1020)

4. The method according to claim 3, further comprising, subsequent to transmitting the first message:
receiving, by the first terminal, a fourth message transmitted by the relay terminal, the fourth message is a direct communication accept message, the fourth message comprising a link layer identifier of a second terminal, and a data packet header of the fourth message carrying a link layer identifier of the relay terminal.

5. A wireless communication method, comprising:
receiving, by a second terminal (1030), a second message transmitted by a relay terminal (1020) based on a link layer identifier of the second terminal (1030), wherein the second message is a direct communication request message, the second message comprises the link layer identifier of the second terminal (1030), wherein the link layer identifier of the second terminal (1030) is Layer 2 ID, and a frame structure of a data packet of the second message carries a link layer identifier of the relay terminal (1020); and
transmitting, by the second terminal (1030), a third message to the relay terminal (1020), the third message is a direct communication accept message, the third message comprising the link layer identifier of the first terminal (1010), and a data packet header of the third message carrying a link layer identifier of the second terminal (1030).

6. A terminal device, comprising a processor and a memory, wherein the memory has a computer program stored thereon, and the processor is configured to invoke and execute the computer program stored in the memory to perform the method according to claim 1 or 2, the method according to claim 3 or 4, or the method according claim 5.

7. A computer-readable storage medium, storing a computer program that causes a computer to perform the method according to claim 1 or 2, the method according to claim 3 or 4, or the method according to claim 5.

8. A computer program product, comprising computer program instructions that cause a computer to perform the method according to claim 1 or 2, the method according to claim 3 or 4, or the method according to claim 5.

## Patentansprüche

1. Drahtloses Kommunikationsverfahren, umfassend:
Empfangen, durch ein Relaisendgerät (1020), einer ersten Nachricht, die von einem ersten Endgerät (1010) übertragen wurde, wobei die erste Nachricht eine Verbindungsschichtkennung eines zweiten Endgeräts (1030) umfasst,
wobei die erste Nachricht eine Direktkommunikationsanforderungsnachricht ist und eine Rahmenstruktur eines Datenpakets der ersten Nachricht enthält eine Verbindungsschichtkennung des ersten Endgeräts (1010) enthält; und
Übertragen, durch das Relaisendgerät (1020), einer zweiten Nachricht an das zweite Endgerät (1030) basierend auf der Verbindungsschichtkennung des zweiten Endgeräts (1030) in der ersten Nachricht, wobei die zweite Nachricht eine Direktkommunikationsanforderungsnachricht ist, die zweite Nachricht die Verbindungsschichtkennung des zweiten Endgeräts (1030) umfasst, wobei die Verbindungsschichtkennung des zweiten Endgeräts (1030) eine Schicht-2-ID ist, und eine Rahmenstruktur eines Datenpakets der zweiten Nachricht eine Verbindungsschichtkennung des Relaisendgeräts (1020) enthält.

2. Verfahren nach Anspruch 1, ferner umfassend:
Empfangen, durch das Relaisendgerät, einer dritten Nachricht, die von einem zweiten Endgerät übertragen wurde, wobei die dritte Nachricht eine Direktkommunikationsannahmenachricht ist, die dritte Nachricht die Verbindungsschichtkennung des ersten Endgeräts umfasst und ein Datenpaketkopf der dritten Nachricht eine Verbindungsschichtkennung des zweiten Endgeräts enthält; und
Übertragen, durch das Relaisendgerät, einer vierten Nachricht an das erste Endgerät, wobei die vierte Nachricht eine Direktkommunikationsannahmenachricht ist, die vierte Nachricht die Verbindungsschichtkennung des zweiten Endgeräts umfasst und ein Datenpaketkopf der vierten Nachricht die Verbindungsschichtkennung des Relaisendgeräts enthält.

3. Drahtloses Kommunikationsverfahren, umfassend:
Übertragen, durch ein erstes Endgerät (1010), einer ersten Nachricht an ein Relaisendgerät (1020), wobei die erste Nachricht eine Verbindungsschichtkennung eines zweiten Endgeräts (1030) umfasst,
wobei die erste Nachricht eine Direktkommunikationsanforderungsnachricht, eine Rahmenstruktur eines Datenpakets der ersten Nachricht eine Verbindungsschichtkennung des ersten Endgeräts (1010) enthält und die Verbindungsschichtkennung des zweiten Endgeräts (1030) in der ersten Nachricht vom Relaisendgerät (1020) verwendet wird, um eine zweite Nachricht an das zweite Endgerät (1030) zu übertragen,
wobei die zweite Nachricht eine Direktkommunikationsanforderungsnachricht ist, die zweite Nachricht die Verbindungsschichtkennung des zweiten Endgeräts (1030) enthält,
wobei die Verbindungsschichtkennung des zweiten Endgeräts (1030) Schicht-2-ID ist und eine Rahmenstruktur eines Datenpakets der zweiten Nachricht eine Verbindungsschichtkennung des Relaisendgeräts (1020) enthält.

4. Verfahren nach Anspruch 3, ferner umfassend, nach dem Übertragen der ersten Nachricht:
Empfangen, durch das erste Endgerät, einer vierten Nachricht, die von dem Relaisendgerät übertragen wurde, wobei die vierte Nachricht eine Direktkommunikationsannahmenachricht ist, die vierte Nachricht eine Verbindungsschichtkennung eines zweiten Endgeräts umfasst und ein Datenpaketkopf der vierten Nachricht eine Verbindungsschichtkennung des Relaisendgeräts enthält.

5. Drahtloses Kommunikationsverfahren, umfassend:
Empfangen, durch ein zweites Endgerät (1030), einer zweiten Nachricht, die von einem Relaisendgerät (1020) übertragen wurde, basierend auf einer Verbindungsschichtkennung des zweiten Endgeräts (1030),
wobei die zweite Nachricht eine Direktkommunikationsanforderungsnachricht ist, die zweite Nachricht die Verbindungsschichtkennung des zweiten Endgeräts (1030) umfasst, wobei die Verbindungsschichtkennung des zweiten Endgeräts (1030) Schicht-2-ID ist, und eine Rahmenstruktur eines Datenpakets der zweiten Nachricht eine Verbindungsschichtkennung des Relaisendgeräts (1020) enthält; und
Übertragen, durch das zweite Endgerät (1030), einer dritten Nachricht an das Relaisendgerät (1020), wobei die dritte Nachricht eine Direktkommunikationsannahmenachricht ist, die dritte Nachricht die Verbindungsschichtkennung des ersten Endgeräts (1010) umfasst
und ein Datenpaketkopf der dritten Nachricht eine Verbindungsschichtkennung des zweiten Endgeräts (1030) enthält.

6. Endgerätevorrichtung, umfassend einen Prozessor und einen Speicher, wobei der Speicher ein Computerprogramm darauf gespeichert aufweist, und der Prozessor dazu konfiguriert ist, das in dem Speicher gespeicherte Computerprogramm aufzurufen und auszuführen, um das Verfahren nach einem der Ansprüche 1 oder 2, das Verfahren nach Anspruch 3 oder 4 oder das Verfahren nach Anspruch 5 durchzuführen.

7. Computerlesbares Speichermedium, das ein Computerprogramm speichert, das einen Computer veranlasst, das Verfahren nach Anspruch 1 oder 2, das Verfahren nach Anspruch 3 oder 4 oder das Verfahren nach Anspruch 5 durchzuführen.

8. Computerprogrammprodukt, das Computerprogrammanweisungen umfasst, die einen Computer veranlassen, das Verfahren nach Anspruch 1 oder 2, das Verfahren nach Anspruch 3 oder 4 oder das Verfahren nach Anspruch 5 durchzuführen.

## Revendications

1. Procédé de communication sans fil, comprenant :
la réception, par un terminal relais (1020), d'un premier message transmis par un premier terminal (1010), dans lequel le premier message comprend un identifiant de couche de liaison d'un second terminal (1030),
le premier message est un message de demande de communication directe, et une structure de trame d'un paquet de données du premier message transporte un identifiant de couche de liaison du premier terminal (1010) ; et
la transmission, par le terminal relais (1020), d'un deuxième message au second terminal (1030) sur la base de l'identifiant de couche de liaison du second terminal (1030) dans le premier message, dans lequel le deuxième message est un message de demande de communication directe, le deuxième message comprend l'identifiant de couche de liaison du second terminal (1030), dans lequel l'identifiant de couche de liaison du second terminal (1030) est une ID de couche 2, et une structure de trame d'un paquet de données du deuxième message transporte un identifiant de couche de liaison du terminal relais (1020).

2. Procédé selon la revendication 1, comprenant en outre :
la réception, par le terminal relais, d'un troisième message transmis par un second terminal, dans lequel le troisième message est un message d'acceptation de communication directe, le troisième message comprend l'identifiant de couche de liaison du premier terminal et un en-tête de paquet de données du troisième message transporte un identifiant de couche de liaison du second terminal ; et
la transmission, par le terminal relais, d'un quatrième message au premier terminal, dans lequel le quatrième message est un message d'acceptation de communication directe, le quatrième message comprend l'identifiant de couche de liaison du second terminal et un en-tête de paquet de données du quatrième message transporte l'identifiant de couche de liaison du terminal relais.

3. Procédé de communication sans fil, comprenant :
la transmission, par un premier terminal (1010), d'un premier message à un terminal relais (1020), dans lequel le premier message comprend un identifiant de couche de liaison d'un second terminal (1030),
le premier message est un message de demande de communication directe, dans lequel une structure de trame d'un paquet de données du premier message transporte un identifiant de couche de liaison du premier terminal (1010), et l'identifiant de couche de liaison du second terminal (1030) dans le premier message est utilisé par le terminal relais (1020) pour transmettre un deuxième message au second terminal (1030),
dans lequel le deuxième message est un message de demande de communication directe, le deuxième message comprend l'identifiant de couche de liaison du second terminal (1030),
dans lequel l'identifiant de couche de liaison du second terminal (1030) est une ID de couche 2, et une structure de trame d'un paquet de données du deuxième message transporte un identifiant de couche de liaison du terminal relais (1020).

4. Procédé selon la revendication 3, comprenant en outre, après la transmission du premier message :
la réception, par le premier terminal, d'un quatrième message transmis par le terminal relais, dans lequel le quatrième message est un message d'acceptation de communication directe, le quatrième message comprend un identifiant de couche de liaison d'un second terminal et un en-tête de paquet de données du quatrième message transporte un identifiant de couche de liaison du terminal relais.

5. Procédé de communication sans fil, comprenant :
la réception, par un second terminal (1030), d'un deuxième message transmis par un terminal relais (1020) sur la base d'un identifiant de couche de liaison du second terminal (1030),
dans lequel le deuxième message est un message de demande de communication directe, le deuxième message comprend l'identifiant de couche de liaison du second terminal (1030), dans lequel l'identifiant de couche de liaison du second terminal (1030) est une ID de couche 2, et une structure de trame d'un paquet de données du deuxième message transporte un identifiant de couche de liaison du terminal relais (1020) ; et
la transmission, par le second terminal (1030), d'un troisième message vers le terminal relais (1020), dans lequel le troisième message est un message d'acceptation de communication directe, le troisième message comprend l'identifiant de couche de liaison du premier terminal (1010),
et un en-tête de paquet de données du troisième message transporte un identifiant de couche de liaison du second terminal (1030).

6. Dispositif terminal, comprenant un processeur et une mémoire, dans lequel la mémoire présente un programme informatique, et le processeur est configuré pour invoquer et exécuter le programme informatique stocké dans la mémoire afin de réaliser le procédé selon la revendication 1 ou 2, le procédé selon la revendication 3 ou 4 ou le procédé selon la revendication 5.

7. Support de stockage lisible par ordinateur, stockant un programme informatique qui amène un ordinateur à réaliser le procédé selon la revendication 1 ou 2, le procédé selon la revendication 3 ou 4 ou le procédé selon la revendication 5.

8. Produit de programme informatique comprenant des instructions de programme informatique qui amènent un ordinateur à réaliser le procédé selon la revendication 1 ou 2, le procédé selon la revendication 3 ou 4 ou le procédé selon la revendication 5.
